# EUROPÄISCHE PATENTANMELDUNG

(11) **EP 3 785 967 A1**
(43) Veröffentlichungstag der Anmeldung: **03.03.2021**
(21) Anmeldenummer: 20190527.0
(22) Anmeldetag: 11.08.2020
(51) Int. Cl.: B60K 11/08, F01P 1/00, B60R 13/08

(54) **MOTORKAPSELUNG EINES FAHRZEUGES**

(30) Priorität: 30.08.2019 DE 102019213166
(71) Anmelder: ContiTech MGW GmbH, 34346 Hann. Münden (DE)
(72) Erfinder: Kreidner, Harald, 30419 Hannover (DE)
(74) Vertreter: Continental Corporation

(57) **Zusammenfassung**

Die Erfindung betrifft eine Motorkapselung (3) eines Fahrzeuges (1), wobei die Motorkapselung (3) aus einem wärmedämmenden Material hergestellt ist und einen zumindest teilweise geschlossenen Aufnahmeraum (32) für einen Verbrennungsmotor (2) des Fahrzeuges (1) umgrenzt, wobei die Motorkapselung (3) einen vorderen Kühllufteinlass und einen hinteren Kühlluftauslass aufweist, durch die der Aufnahmeraum (32) mit einem Kühlluftstrom durchströmbar ist, wobei der Kühllufteinlass und/oder der Kühlluftauslass von jeweils mindestens einem Kühlluftrohr (5) gebildet ist, welches mit einem Ende mit dem geschlossenen Aufnahmeraum (32) und mit dem anderen Ende mit der Umgebung kommuniziert.

## Beschreibung

Die Erfindung betrifft eine Motorkapselung eines Fahrzeuges, insbesondere eines Kraftfahrzeuges, welches mit einem Verbrennungsmotor ausgerüstet ist, wobei die Motorkapselung aus einem wärmedämmenden Material hergestellt ist und einen zumindest teilweise geschlossenen, vorzugsweise vollständig bzw. vollkommen geschlossenen Aufnahmeraum für den Verbrennungsmotor des Fahrzeuges umgrenzt. Zur Kühlung des eine erhebliche Abwärme produzierenden Verbrennungsmotors weist die Motorkapselung einen vorderen Kühllufteinlass und einen hinteren Kühlluftauslass auf, durch die der Aufnahmeraum mit einem Kühlluftstrom durchströmbar ist, um die anfallende Abwärme abzuführen.

Im Zuge stetig wachsender Anforderungen an die Kraftstoffeffizienz und möglichst niedriger Schadstoff- sowie Schallemissionen von mit Verbrennungsmotoren ausgerüsteten Fahrzeugen kommt einer möglichst geschlossenen Motorkapselung eine stetig größer werdende Bedeutung bei. Diese Motorkapselung soll neben einer Dämmung der Schallemissionen dazu führen, die Restwärme im Verbrennungsmotor möglichst lange zu erhalten und somit das Kaltstartverhalten zu optimieren. Dabei tritt jedoch das Problem auf, dass eine aus wärmedämmenden Material hergestellte Motorkapselung auch als Isolator wirkt und Bauteile, die bislang frei im Motorraum lagen und ihre Wärme ungehindert abführen konnten, bei Einkapselung in einer Motorkapselung diese Wärme nicht mehr ungehindert abführen können, was zu thermischen Problemen führt und dazu, dass aufgrund der thermischen Belastung gewisse Materialien nicht mehr eingesetzt werden können, zum Beispiel Motorlager aus Naturkautschuk.

Aus der gattungsbildenden DE 10 2012 106 644 A1 ist es bereits bekannt, den geschlossenen Aufnahmeraum der Motorkapselung von einem Kühlluftstrom bedarfsweise durchströmen zu lassen, um die anfallende Abwärme abzuführen, wobei ein Kühllufteinlass im Bereich der Fahrzeugfront vorgesehen ist, der je nach vorherrschender Temperatur oder Last des Verbrennungsmotors geöffnet oder geschlossen werden kann und darüber hinaus ein hinterer Kühlluftauslass, d. h. in Fahrtrichtung gesehen hinter dem Motor angeordnet ist, über den die den Aufnahmeraum durchströmende Kühlluft wieder abgeführt wird.

Es hat sich allerdings in der Praxis gezeigt, dass eine simple Öffnung der Motorkapselung zum Beispiel mittels einer öffenbaren Kühllufteinlassklappe nicht hinreichend ist, um gewisse thermisch hochbelastete Bauteile innerhalb der Motorkapselung ausreichend zu kühlen, da diese unter Umständen an schlecht erreichbaren Stellen im Strömungsschatten des durch den Aufnahmeraum strömenden Luftstromes liegen können.

Aufgabe der Erfindung ist es daher, eine Motorkapselung der eingangs genannten Art vorzuschlagen, die sich baulich einfach realisieren lässt und eine gezielte und effektive Kühlung thermisch belasteter Bereiche eines Verbrennungsmotors innerhalb der Motorkapselung zu gewährleisten.

Zur Lösung der gestellten Aufgabe wird erfindungsgemäß die Ausgestaltung einer Motorkapselung gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass der Kühllufteinlass und/oder der Kühlluftauslass von jeweils mindestens einem Kühlluftrohr gebildet ist, welches mit einem Ende mit dem geschlossenen Aufnahmeraum und mit dem anderen Ende mit der Umgebung kommuniziert. Durch die erfindungsgemäß vorgesehene Ausgestaltung des Kühllufteinlasses und/oder des Kühlluftauslasses in Form von Kühlluftrohren kann der Kühlluftstrom gezielt an die Stellen innerhalb des geschlossenen Aufnahmeraums geleitet werden, an denen die thermisch besonders belasteten und kühlbedürftigen Bauteile des Verbrennungsmotors angeordnet sind. Die Kühlluftrohre können insoweit an bestimmten Positionen der den Aufnahmeraum umgrenzenden Motorkapselung enden und mit dem Aufnahmeraum kommunizieren oder aber durch die Wandung der Motorkapselung hindurch bis in den Aufnahmeraum unmittelbar den jeweils zu kühlenden Bauteilen gegenüberliegend geführt werden.

Nach einem Vorschlag der Erfindung weisen die zur Ausbildung des Kühllufteinlasses und/oder Kühlluftauslasses verwendeten Rohre eine möglichst geringe Wärmekapazität auf, indem sie beispielsweise aus einem geschäumten Kunststoff, der gegebenenfalls auch Faser verstärkte sein kann, ausgebildet werden.

Hierbei ist sowohl die Ausgestaltung des mindestens einen Kühlluftrohr aus entsprechenden Schlauchabschnitten als auch aus einem blasgeformten Rohrabschnitt im Rahmen der Erfindung vorgesehen.

Um eine ausreichende Durchströmung des Aufnahmeraums der erfindungsgemäßen Motorkapselung sicherzustellen, wird nach einem Vorschlag der Erfindung vorgesehen, dass das mindestens eine Kühlluftrohr den vorderen Kühllufteinlass bildet und insoweit im Frontbereich des Fahrzeuges über eines seiner Enden mit der Umgebung kommuniziert, während das gegenüberliegende Ende mit dem Aufnahmeraum kommuniziert. Sobald sich das Fahrzeug in seiner Fahrtrichtung bewegt, entsteht im Frontbereich ein entsprechender Fahrtwindstrom, der mit entsprechendem Überdruck in das mindestens eine Kühlluftrohr des vorderen Kühllufteinlasses ein strömt und von dort in den Aufnahmeraum gelangt. Es versteht sich, dass der Aufnahmeraum in diesem Fall zur Ausbildung des Kühlluftauslasses mit geeigneten Ventilationsöffnungen versehen ist.

Nach einer alternativen Ausgestaltung der Erfindung wird vorgesehen, dass das mindestens eine Kühlluftrohr den hinteren Kühlluftauslass bildet und im Bereich des Unterbodens des Fahrzeuges über eines seiner Enden mit der Umgebung kommuniziert, während das gegenüberliegende Ende mit dem Aufnahmeraum kommuniziert. Das im Bereich des Unterbodens des Fahrzeuges verlegte Ende wirkt dann bei Bewegung des Fahrzeuges in seiner Fahrtrichtung beispielsweise nach Art einer Venturi-Düse und erzeugt einen Unterdruck, der letztlich in einem Luftstrom aus dem Aufnahmeraum resultiert, welcher die Abwärme des Motors an die Umgebung abführt. Es versteht sich, dass der Aufnahmeraum in diesem Fall zur Ausbildung des Kühllufteinlass es mit geeigneten Ventilationsöffnungen versehen ist.

Darüber hinaus ist auch die Ausgestaltung sowohl des Kühllufteinlasses als auch des Kühlluftauslasses mittels der erfindungsgemäßen Kühlluftrohr möglich, die sodann beiderseits die Entstehung eines Kühlluftstrom es bei Bewegung des Fahrzeuges in Fahrtrichtung fördern.

Um auch bei Stillstand des Fahrzeuges die insbesondere bei vorheriger hoher Motorlast anfallende Abwärme noch über einen gewissen Zeitraum abführen zu können, kann nach einem weiteren Vorschlag der Erfindung in dem mindestens einen Kühlluftrohr auch ein Ventilator angeordnet sein, der den Kühlluftstrom auch bei stehendem Fahrzeug aufrecht erhält, bis die Temperatur im Aufnahmeraum unter einen vorgebbare Grenzwert abgesunken ist. Dieser Ventilator kann nach einem weiteren Vorschlag der Erfindung auch in einer Bypassleitung geführt sein, um durch den unvermeidbaren Strömungswiderstand die Durchströmung des Aufnahmeraumes bei sich bewegenden Fahrzeug nicht zu behindern.

Die vorangehend erläuterte Motorkapselung eines Fahrzeuges kann insbesondere bei Kraftfahrzeugen Anwendung finden, eignet sich aber auch in all denjenigen Fällen, in denen eine Kühlung des Aufnahmeraumes der Motorkapselung stattfinden muss und eine ausreichende Luftumströmung vorliegt.

Weitere Ausgestaltungen und Einzelheiten der Erfindung werden nachfolgend anhand von Ausführungsbeispielen in der Zeichnung erläutert. Es zeigen:
- Figur 1: in einer stark schematisierten Darstellung die Motorkapselung eines Fahrzeuges gemäß der Erfindung in einer ersten Ausführungsform;
- Figur 2: in einer stark schematisierten Darstellung die Motorkapselung eines Fahrzeuges gemäß der Erfindung in einer zweiten Ausführungsform;
- Figur 3: eine Abwandlung der Ausgestaltung gemäß Figur 2.

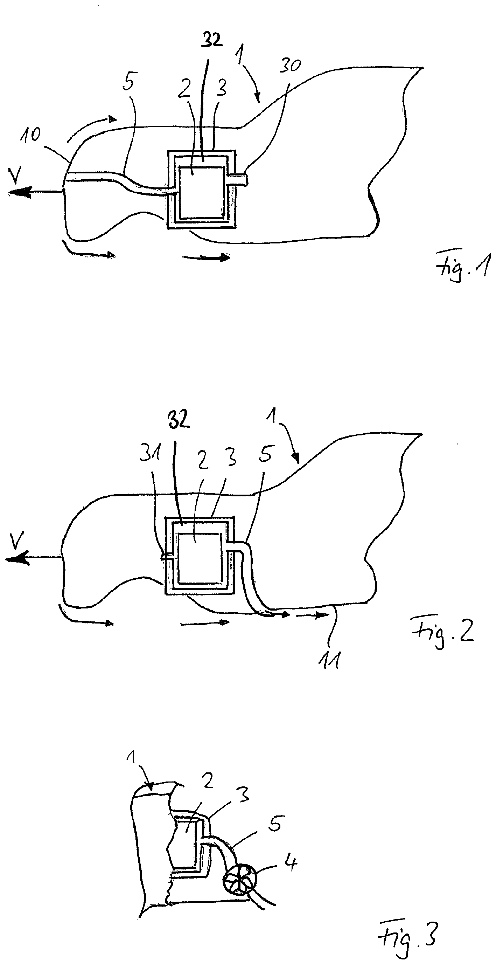

Aus der Figur 1 ist in einer stark vereinfachten schematisierten Darstellung ein Fahrzeug 1, hier ein Kraftfahrzeug, dargestellt welches einen Verbrennungsmotor 2 in an sich bekannter Weise aufweist.

Zur optimierten Restwärmeausnutzung des Verbrennungsmotors 2 ist eine geschlossene Motorkapselung 3 aus einem wärmedämmenden Material vorgesehen, die einen geschlossenen Aufnahmeraum 32 umgrenzt, in welchem der Verbrennungsmotor 2 aufgenommen ist.

Zur Sicherstellung einer ausreichenden Kühlung des Verbrennungsmotors 2 innerhalb des Aufnahmeraumes 32 ist ein vorderer Kühllufteinlass vorgesehen, der in Form mindestens eines Kühlluftrohres 5 aus einem geschäumten Kunststoff mit geringer Wärmekapazität, beispielsweise einem entsprechenden Schlauchabschnitt gebildet ist. Mit einem Ende kommuniziert das Kühlluftrohr 5 mit dem Aufnahmeraum 32 der Motorkapselung 3, d. h. das Kühlluftrohr 5 ist durch die Wandung der Motorkapselung 3 hindurch in den Aufnahmeraum 32 geführt, vorzugsweise an einer Stelle, an der besonders thermisch belastete Bauteile des Verbrennungsmotors 2 angeordnet sind.

Das andere Ende des Kühlluftrohrs 5 ist zum Frontbereich 10 des Fahrzeugs 1 geführt, beispielsweise zu einer entsprechenden Öffnung im Kühlergrill eines als Kraftfahrzeug ausgebildeten Fahrzeugs 1.wenn das Fahrzeug demgemäß in seiner Fahrtrichtung mit einer Geschwindigkeit V bewegt wird, wird die angedeutete Karosserie des Fahrzeuges 1 wie durch die Pfeile angedeuteten von einem Luftstrom (Fahrtwind) umströmt und ein Teil dieses Luftstromes tritt auch in das Kühlluftrohr 5 ein. Von dort gelangt der Kühlluftstrom exakt zu den gewünschten Bauteilen des Verbrennungsmotors 2 innerhalb der Motorkapselung 3, sodass die anfallende Abwärme an diesen Kühlluftstrom abgegeben werden kann. Anschließend verlässt der Kühlluftstrom die Motorkapselung 3 und den umgrenzten Aufnahmeraum 32 über eine entsprechende Ventilationsöffnung 30, die den Kühlluftauslass bildet.

In der Figur 2 ist eine gegenüber dem Ausführungsbeispiel gemäß Figur 1 abgewandelte Ausgestaltung dargestellt, bei der gleiche Teile gleiche Bezugszeichen erhalten und zur Vermeidung von Wiederholungen nicht nochmals gesondert erläutert werden, sofern dies nicht zum Verständnis der Erfindung erforderlich ist.

Im Unterschied zum Ausführungsbeispiel gemäß Figur 1 dient das Kühlluftrohr 5 beim Ausführungsbeispiel der Figur 2 nicht zur Ausbildung des vorderen Kühllufteinlasses, sondern zur Ausbildung des hinteren Kühlluftauslasses und kommuniziert mit einem Ende mit dem Aufnahmeraum 32 der Motorkapselung 3, in welcher sich der Verbrennungsmotor 2 befindet.

Das andere Ende des Kühlluftrohrs 5 ist zu einer geeigneten Stelle im Bereich des Unterbodens 11 des Fahrzeuges 1 geführt und kommuniziert dort mit der Umgebung, sodass bei Bewegung des Fahrzeuges 1 mit einer Geschwindigkeit V in seiner Hauptfahrtrichtung und entsprechender um Strömung der Karosserie an diesem im Bereich des Unterbodens 11 zum Liegen kommenden Ende des Kühlluftrohrs 5 ein Unterdruck entsteht, sodass die mit Abwärme belastete Luft aus dem Aufnahmeraum 32 über das Kühlluftrohr 5 an die Umgebung abgeführt wird. Ein entsprechendes nach strömen von Luft in das Innere des Aufnahmeraums 32 wird über eine entsprechende Ventilationsöffnung 31, die den Kühllufteinlass bildet, sichergestellt. Auch bei dieser Ausführungsform wird somit ein Kühlluftstrom durch das Innere der Motorkapselung 3 zur gezielten Abführung der Wärme von thermisch hochbelasteten Bauteilen des Motors 2 selbsttätig bei Bewegung des Fahrzeuges 1 mit einer Geschwindigkeit V in Fahrtrichtung gewährleistet.

Aus der Figur 3 ist überdies ersichtlich, dass beispielsweise zur Aufrechterhaltung der Wärmeabfuhr bei stehendem Fahrzeug 1 innerhalb des Kühlluftrohrs 5 auch ein schaltbare Ventilator 4 vorgesehen sein kann, der beispielsweise von einem Elektromotor angetrieben bei stehendem Fahrzeug den Kühlluftstrom durch das Kühlluftrohr 5 für einen gewissen Zeitraum, beispielsweise gesteuert durch Temperatursensoren am Verbrennungsmotor 2, aufrecht erhält. Es versteht sich, dass ein solcher Ventilator 4 auch in einem Kühlluftrohr 5 gemäß der Ausgestaltung in Figur 1 integriert sein kann.

Ferner ist es auch möglich, anstelle der Ventilationsöffnungen 30, 31 in Figur 1 bzw. Figur 2 jeweils auch Kühlluftrohre 5 vorzusehen, sodass sowohl der Kühllufteinlass als auch der Kühlluftauslass jeweils von Kühlluftrohren 5 gebildet wird.

### Bezugszeichenliste:

- 1:: Fahrzeug
- 2:: Verbrennungsmotor
- 3:: Motorkapselung
- 4:: Ventilator
- 5:: Kühlluftrohr
- 10:: Frontbereich
- 11:: Unterboden
- 30:: Ventilationsöffnung
- 31:: Ventilationsöffnung
- 32:: Aufnahmeraum

## Patentansprüche

1. Motorkapselung (3) eines Fahrzeuges (1), wobei die Motorkapselung (3) aus einem wärmedämmenden Material hergestellt ist und einen zumindest teilweise geschlossenen Aufnahmeraum (32) für einen Verbrennungsmotor (2) des Fahrzeuges (1) umgrenzt, wobei die Motorkapselung (3) einen vorderen Kühllufteinlass und einen hinteren Kühlluftauslass aufweist, durch die der Aufnahmeraum (32) mit einem Kühlluftstrom durchströmbar ist, **dadurch gekennzeichnet, dass** der Kühllufteinlass und/oder der Kühlluftauslass von jeweils mindestens einem Kühlluftrohr (5) gebildet ist, welches mit einem Ende mit dem geschlossenen Aufnahmeraum (32) und mit dem anderen Ende mit der Umgebung kommuniziert.

2. Motorkapselung (3) nach Anspruch 1, **dadurch gekennzeichnet, dass** das mindestens eine Kühlluftrohr (5) aus einem geschäumten Kunststoff hergestellt ist.

3. Motorkapselung (3) nach Anspruch 1 oder 2, **dadurch gekennzeichnet, dass** das mindestens eine Kühlluftrohr (5) aus einem Schlauchabschnitt oder einem blasgeformten Rohrabschnitt gefertigt ist.

4. Motorkapselung (3) nach einem der Ansprüche 1 oder 2, **dadurch gekennzeichnet, dass** das mindestens eine Kühlluftrohr (5) den vorderen Kühllufteinlass bildet und im Frontbereich (10) des Fahrzeuges (1) mit der Umgebung kommuniziert.

5. Motorkapselung (3) nach einem der Ansprüche 1 bis 3, **dadurch gekennzeichnet, dass** das mindestens eine Kühlluftrohr (5) den hinteren Kühlluftauslass bildet und im Bereich des Unterbodens (11) des Fahrzeuges (1) mit der Umgebung kommuniziert.

6. Motorkapselung (3) nach einem der Ansprüche 1 bis 4, **dadurch gekennzeichnet, dass** in dem mindestens einen Kühlluftrohr (5) ein Ventilator (4) angeordnet ist.

7. Motorkapselung nach Anspruch 5, **dadurch gekennzeichnet, dass** der Ventilator (4) in einer schaltbaren Bypassleitung angeordnet ist.

8. Als Kraftfahrzeug ausgebildetes Fahrzeug (1) mit einer Motorkapselung (3) gemäß einem der vorangehenden Ansprüche.
